# FASCICULE DE BREVET EUROPEEN

(11) **EP 4 392 651 B1**
(45) Date de publication et mention de la délivrance du brevet: **08.10.2025**
(21) Numéro de dépôt: 22765886.1
(22) Date de dépôt: 18.08.2022
(51) Int. Cl.: F02C 7/14, F01D 25/08, F28D 9/00

(54) **SYSTÈME DE REFROIDISSEMENT D'UN FLUIDE RÉFRIGÉRANT POUR AÉRONEF COMPORTANT UN DISPOSITIF DE CHAUFFAGE SÉCURITAIRE ET PROCÉDÉ D'UTILISATION D'UN TEL SYSTÈME**
KÜHLSYSTEM FÜR EIN FLUGZEUGKÜHLUNGSFLUID MIT EINER SICHERHEITSHEIZVORRICHTUNG UND VERFAHREN ZUR VERWENDUNG EINES SOLCHEN SYSTEMS
SYSTEM FOR COOLING A REFRIGERANT FOR AN AIRCRAFT COMPRISING A SAFETY HEATING DEVICE AND METHOD FOR USING SUCH A SYSTEM

(30) Priorité: 26.08.2021 FR 2108950
(43) Date de publication de la demande: 03.07.2024
(73) Titulaire: Safran Nacelles, 76700 Gonfreville-l'Orcher (FR)
(72) Inventeur: CARUEL, Pierre Charles, 77550 MOISSY-CRAMAYEL (FR)
(74) Mandataire: Argyma
(86) Numéro de dépôt international: PCT/EP2022/073122
(87) Numéro de publication internationale: WO 2023/025664

(56) Documents cités:
- EP-B1- 0 019 492
- US-A1- 2019 217 965
- US-A1- 2020 318 546

## Description

### Domaine technique

La présente invention concerne le domaine des échangeurs de chaleur et vise plus précisément un système de refroidissement d'un fluide réfrigérant pour aéronef.

De manière connue, un aéronef comprend un ou plusieurs ensembles propulsifs comprenant une turbomachine et une nacelle. La turbomachine est configurée pour permettre la propulsion de l'aéronef à partir de l'accélération d'un flux d'air intérieur circulant dans une veine secondaire de la turbomachine et provenant d'un flux d'air extérieur. La nacelle s'étend autour de la turbomachine et permet de guider le flux d'air extérieur dans la turbomachine.

De manière connue, la turbomachine comprend un ensemble d'organes rotatifs, tels qu'une soufflante, un ou plusieurs compresseurs, une ou plusieurs turbines, un boîtier d'entraînement d'accessoires, un ou plusieurs générateurs électriques d'accessoires (non représentés), etc. Pour assurer le refroidissement et la lubrification des organes rotatifs (zones chaudes), il est connu de faire circuler un fluide réfrigérant, usuellement de l'huile, au contact des portions tournantes dans un circuit fermé afin de prélever la chaleur et les refroidir. Pour assurer le refroidissement du fluide réfrigérant, l'aéronef comporte de manière connue un ou plusieurs échangeurs de chaleur pour prélever la chaleur du fluide réfrigérant.

Il est connu par la demande de brevet FR3094753A1 un échangeur de chaleur du type surfacique qui s'étend au niveau de la surface de la nacelle de manière à refroidir le fluide réfrigérant, formant la source chaude, par convection avec un flux d'air, formant la source froide. Ainsi, la circulation du flux d'air permet de prélever de la chaleur dans le fluide réfrigérant qui provient des zones chaudes de la turbomachine. Le flux d'air se présente sous la forme du flux d'air extérieur à la turbomachine, si l'échangeur surfacique est monté sur la surface extérieure de la nacelle, et sous la forme du flux d'air intérieur circulant dans la veine secondaire de la turbomachine si l'échangeur surfacique est monté sur la surface intérieure de la nacelle. Une fois refroidi par le flux d'air, le fluide réfrigérant est de nouveau mis en contact avec les zones chaudes pour prélever de nouveau de la chaleur dans les zones chaudes. L'échangeur de chaleur surfacique comporte un ensemble de canaux, traditionnellement parallèles, dans lesquels circule le fluide réfrigérant afin de favoriser les échanges convectifs avec le flux d'air. Le document EP0019492 montre un système de refroidissement selon l'art antérieur.

En pratique, le fluide réfrigérant est susceptible de figer dans les canaux, notamment en cas d'exposition prolongée à des températures extérieures très basses et/ou lorsque le débit de fluide réfrigérant est trop faible. De telles conditions peuvent être rencontrées lors d'un arrêt moteur en vol de la turbomachine ou encore en cas de stationnement prolongé de l'aéronef au sol par temps très froid. De telles conditions ralentissent voire empêchent la circulation du fluide réfrigérant dans les canaux, ce qui perturbe le refroidissement de manière indésirable des zones chaudes de la turbomachine après le démarrage ou le redémarrage du moteur.

Pour y remédier, il est connu pour des échangeurs de chaleur à ailettes de prévoir un canal de déviation, s'étendant de manière périphérique autour de l'ensemble des canaux de fluide réfrigérant. En cas de figeage, le fluide réfrigérant circule dans le canal de déviation afin de chauffer par conduction les canaux figés. Toutefois, les échangeurs de chaleur à ailettes présentent l'inconvénient de perturber l'écoulement du flux d'air extérieur, ce qui réduit de manière indésirable les performances de la turbomachine. En effet, les ailettes forment des aspérités à la surface de la nacelle, qui favorisent les échanges thermiques et permettent de disposer de manière compacte les canaux, mais présentent l'inconvénient de réduire de manière indésirable les performances aérodynamiques de la nacelle.

Pour résoudre cet inconvénient, une solution immédiate serait de prévoir un canal de déviation périphérique sur un échangeur de chaleur surfacique avec une peau externe lisse et aérodynamique. Une telle solution ne permet cependant pas de chauffer efficacement l'ensemble des canaux qui sont plus espacés que dans un échangeur de chaleur à ailettes. Il serait ainsi nécessaire de monter un canal auxiliaire à côté de chaque canal, ce qui est coûteux et encombrant. En outre, pour être efficace, il serait nécessaire d'employer un fluide caloporteur de faible plage de viscosité, qui présente l'inconvénient d'être cher, avec une masse volumique élevée et nécessitant un circuit fermé dédié à bord de l'aéronef.

L'invention vise ainsi à éliminer au moins certains de ces inconvénients.

### PRESENTATION DE L'INVENTION

L'invention concerne un système de refroidissement d'un fluide réfrigérant pour aéronef, le système de refroidissement comprenant une pluralité de canaux de circulation du fluide réfrigérant, les canaux de circulation étant configurés pour être au moins partiellement en contact avec un flux d'air de manière à refroidir le fluide réfrigérant par convection.

L'invention est remarquable en ce que le système de refroidissement comprend :
- au moins un dispositif de chauffage sécuritaire s'étendant de manière interne dans au moins une partie desdits canaux de circulation de manière à chauffer directement le fluide réfrigérant,
- au moins un organe de mesure d'un paramètre physique du fluide réfrigérant, qui est fonction du débit du fluide réfrigérant dans les canaux de circulation, et
- au moins un organe de commande configuré pour activer le dispositif de chauffage sécuritaire lorsque le paramètre physique mesuré est inférieur à un seuil prédéterminé correspondant à un débit minimal du fluide réfrigérant dans les canaux de circulation.

L'invention permet avantageusement de favoriser la circulation du fluide réfrigérant dans le système de refroidissement lorsque sa température est basse, en le chauffant grâce au dispositif de chauffage sécuritaire. Le dispositif de chauffage sécuritaire s'étend avantageusement de manière interne dans les canaux de circulation, en contact direct avec le fluide réfrigérant, ce qui favorise les échanges thermiques avec le fluide réfrigérant. Le fluide réfrigérant est ainsi chauffé de manière pratique et rapide, par le système de refroidissement lui-même. Ceci évite de devoir intégrer un dispositif externe de chauffage dans l'environnement chargé de l'aéronef, qui plus est moins efficace car non en contact direct avec le fluide réfrigérant. Un tel dispositif de chauffage sécuritaire permet d'éviter l'obturation d'un ou plusieurs canaux de circulation, et d'ainsi restaurer le fonctionnement de l'échangeur de chaleur après le démarrage ou le redémarrage de la turbomachine.

L'invention propose ainsi d'ajouter une deuxième fonction sécuritaire de chauffage au système de refroidissement, dans laquelle le fluide réfrigérant, i.e. la source froide, est chauffé par le dispositif de chauffage sécuritaire, i.e. la source chaude. Ceci s'oppose à la fonction principale du système de refroidissement qui est de refroidir le fluide réfrigérant, i.e. la source chaude, grâce au flux d'air, i.e. la source froide. L'invention permet ainsi d'éviter que le fluide réfrigérant ne fige voire se solidifie dans les canaux de circulation, notamment suite à une exposition prolongée à de faibles températures ou en l'absence d'alimentation en fluide réfrigérant chaud. On rencontre de telles situations lors d'un arrêt en vol du moteur de l'aéronef ou lors d'un stationnement prolongé au sol de l'aéronef par temps froid.

Selon un aspect préféré de l'invention, le paramètre physique est choisi parmi un ensemble comprenant la température, la vitesse, le débit, la viscosité et la pression du fluide réfrigérant dans les canaux de circulation. De préférence, le paramètre physique mesuré est la température du fluide réfrigérant et le seuil se présente sous la forme d'une température seuil.

Selon un aspect de l'invention, le dispositif de chauffage sécuritaire s'étend de manière interne dans au moins un tiers des canaux de circulation, de préférence dans au moins la moitié des canaux de circulation, préférentiellement dans l'ensemble des canaux de circulation. Le dispositif de chauffage sécuritaire permet ainsi de chauffer de manière efficace et globale le fluide réfrigérant. Le dispositif de chauffage sécuritaire comprend notamment une surface d'échange étendue en contact direct avec le fluide réfrigérant, ce qui favorise les échanges thermiques, notamment par conduction.

De préférence, le système de refroidissement comprend au moins un distributeur configuré pour alimenter les canaux de circulation en fluide réfrigérant, le dispositif de chauffage sécuritaire s'étendant dans au moins une partie du distributeur. Le dispositif de chauffage sécuritaire permet ainsi de chauffer les canaux de circulation mais également le distributeur d'alimentation pour empêcher le colmatage de celui-ci.

De préférence, le système de refroidissement comprend au moins un collecteur configuré pour collecter le fluide réfrigérant en sortie des canaux de circulation, le dispositif de chauffage sécuritaire s'étendant dans au moins une partie du collecteur. Le dispositif de chauffage sécuritaire permet ainsi de chauffer les canaux de circulation mais également le collecteur de sortie des canaux de circulation pour empêcher le colmatage de celui-ci.

Selon un aspect préféré de l'invention, le dispositif de chauffage sécuritaire comporte une section transversale de surface au moins deux fois inférieure à la surface d'une section transversale d'au moins un canal de circulation, de préférence au moins trois fois inférieure à la surface d'une section transversale d'au moins un canal de circulation. Ceci permet de maintenir une circulation optimale du fluide réfrigérant tout en limitant le diamètre des canaux de circulation. Préférentiellement, le dispositif de chauffage sécuritaire comporte une section transversale de surface au plus cinq fois inférieure à la surface d'une section transversale d'au moins un canal de circulation. La surface d'échange du dispositif de chauffage sécuritaire avec le fluide réfrigérant est ainsi étendue ce qui favorise les échanges thermiques.

Selon un aspect de l'invention, au moins une partie des canaux de circulation comportent une paroi comportant une face interne sur laquelle est fixé le dispositif de chauffage sécuritaire, de préférence en une pluralité de points de fixation discontinus les uns des autres. Le dispositif de chauffage sécuritaire est ainsi solidaire des canaux de circulation ce qui évite tout mouvement relatif, à l'origine de chocs et vibrations durant le vol de l'aéronef. Des points de fixation discontinus augmentent de plus la résistance du système de refroidissement à la dilatation thermique, en offrant un certain jeu qui autorise une différence de dilatation thermique entre les canaux de circulation et le dispositif de chauffage sécuritaire.

Selon un aspect de l'invention, au moins une partie des canaux de circulation comportent une paroi comportant une portion d'échange en contact avec le flux d'air et une portion opposée à la portion d'échange qui est isolée du flux d'air, le dispositif de chauffage sécuritaire étant fixé sur la portion opposée. Ceci évite de réduire les échanges thermiques entre le flux d'air et le fluide réfrigérant qui se font au niveau de la portion d'échange. En outre, le montage du dispositif de chauffage sécuritaire sur la portion opposée permet d'éviter de dissiper de la chaleur dans le flux d'air.

Selon un aspect de l'invention, au moins une portion du dispositif de chauffage sécuritaire s'étend de manière ondulée à l'intérieur d'au moins un canal de circulation, de préférence. Ceci permet de favoriser la résistance du système de refroidissement face à une différence de dilatation thermique entre les canaux de circulation et le dispositif de chauffage sécuritaire.

Selon un aspect de l'invention, le système de refroidissement comprend une peau externe, en contact avec le flux d'air, et une peau interne, isolée du flux d'air, définissant ensemble les canaux de circulation, la peau externe étant de préférence lisse de manière à être aérodynamique pour le flux d'air. Le système de refroidissement se présente ainsi sous la forme d'un échangeur de chaleur surfacique, s'opposant à un échangeur de chaleur à ailettes dans lequel la peau externe comporte des aspérités pour augmenter la surface d'échange entre le flux d'air et le fluide réfrigérant. Le système de refroidissement permet avantageusement de favoriser l'écoulement du flux d'air ce qui augmente les performances de l'aéronef.

De préférence, la peau interne est ondulée de manière à définir les canaux de circulation. Les canaux de circulation comportent ainsi une section transversale en forme de demi-cercle pour favoriser l'aérodynamisme de la peau externe.

De préférence, le fluide réfrigérant se présente sous la forme d'huile, configurée pour assurer le refroidissement des portions tournantes d'un ensemble propulsif d'aéronef.

De préférence, la température seuil est inférieure à -20°C, préférentiellement inférieure à -30°C, préférentiellement inférieure à -40°C. Le fluide réfrigérant est figé, voire solidifié, à la température seuil, ce qui réduit voire empêche sa circulation dans les canaux de circulation.

De préférence, le dispositif de chauffage sécuritaire est configuré pour chauffer au-dessus de 50°C, préférentiellement au-dessus de 80°C. Ceci permet de chauffer de manière rapide et efficace le fluide réfrigérant.

Selon un aspect de l'invention, le dispositif de chauffage sécuritaire comprend au moins une conduite de chauffage dans laquelle circule un fluide caloporteur, le fluide caloporteur étant de préférence de l'air. Ceci permet avantageusement de prélever le fluide caloporteur dans le flux d'air, de préférence au niveau du compresseur ou entre les turbines haute pression et basse pression, où il est naturellement chaud, ce qui évite de devoir chauffer l'air.

De préférence, le dispositif de chauffage sécuritaire comprend une unique conduite de chauffage. Cela permet de ne pas alourdir le système de refroidissement et de simplifier la structure du dispositif de chauffage sécuritaire.

Selon un aspect de l'invention, le fluide caloporteur est de l'air comprenant en partie des gaz d'échappement de la turbomachine.

De préférence, le dispositif de chauffage sécuritaire comprend au moins un organe d'alimentation de la conduite en fluide caloporteur, de préférence selon un débit correspondant à un nombre de Reynolds supérieur à 2500, préférentiellement supérieur à 4000. L'écoulement du fluide caloporteur est ainsi turbulent ce qui favorise les échanges thermiques avec le fluide réfrigérant.

De préférence, le dispositif de chauffage sécuritaire comporte au moins un organe de reflux du fluide caloporteur dans le flux d'air, de préférence dans le flux d'air extérieur. Ceci évite de prévoir un circuit fermé et de devoir chauffer le fluide caloporteur.

Selon un aspect de l'invention, le dispositif de chauffage sécuritaire comprend au moins un câble électrique résistif. Cela ne nécessite avantageusement aucun circuit de fluide caloporteur. Le réglage de la température est en outre simplifié.

De préférence, le dispositif de chauffage sécuritaire comprend un unique câble électrique résistif. Cela permet de ne pas alourdir le système de refroidissement et de simplifier la structure du dispositif de chauffage sécuritaire.

De préférence, l'organe de mesure se présente sous la forme d'un capteur de température, de préférence monté dans un canal de circulation pour être précis et fiable.

Selon un aspect préféré, le dispositif de chauffage sécuritaire comprend un matériau conducteur autorégulant, dont la conductivité thermique diminue avec la température. Ceci permet d'augmenter les échanges thermiques lorsque la température du fluide réfrigérant et basse et de réduire les échanges thermiques lorsqu'elle augmente.

L'invention concerne également un aéronef comprenant au moins un ensemble propulsif configuré pour assurer sa propulsion et comprenant au moins un système de refroidissement d'un fluide réfrigérant tel que décrit précédemment, le fluide réfrigérant étant de préférence configuré pour refroidir au moins un organe rotatif de l'ensemble propulsif. De préférence, l'ensemble propulsif comporte une turbomachine.

Grâce à l'invention, la circulation du fluide réfrigérant dans l'aéronef est maintenue fluide même en cas d'arrêt en vol ou de stationnement prolongé au sol par temps très froid notamment. Ceci permet de conserver un débit minimal de réfrigérant circulant dans l'aéronef, notamment pour refroidir les portions tournantes des organes rotatifs des ensembles propulsifs de l'aéronef.

De préférence, l'aéronef comporte une nacelle comportant un carénage et la peau externe du système de refroidissement forme une portion du carénage. De préférence, la peau externe est lisse et aérodynamique pour favoriser l'écoulement du flux d'air. Le système de refroidissement est ainsi exempt d'ailettes.

Selon un aspect préféré, le système de refroidissement s'étend au niveau de la surface extérieure de la nacelle de manière à être en contact avec le flux d'air extérieur à la turbomachine.

Selon un aspect préféré, le système de refroidissement s'étend au niveau de la surface intérieure de la nacelle de manière à être en contact avec le flux d'air intérieur circulant dans la veine secondaire de la turbomachine.

De préférence, le système de refroidissement comporte au moins un organe de prélèvement d'air pour alimenter les conduites du dispositif de chauffage sécuritaire, qui s'étend dans la veine primaire de l'aéronef, de préférence au niveau du compresseur ou entre les turbines haute pression et basse pression.

De préférence, l'organe de mesure du paramètre physique se présente sous la forme d'une sonde de température, préférentiellement montée entre la turbine haute pression et la turbine basse pression de la turbomachine et configurée pour mesurer la température des gaz d'échappement de la turbomachine, connue de l'homme du métier sous le terme de « sonde EGT (Exhaust Gaz Temperature) ».

L'invention concerne également un procédé d'utilisation d'un système de refroidissement tel que décrit précédemment, le procédé d'utilisation comprenant :
- Une étape de mesure d'un paramètre physique du fluide réfrigérant, qui est fonction du débit du fluide réfrigérant dans les canaux de circulation et
- Lorsque le paramètre physique mesuré est inférieur à un seuil prédéterminé correspondant à un débit minimal du fluide réfrigérant dans les canaux de circulation, une étape d'activation du dispositif de chauffage sécuritaire, de manière à chauffer le fluide réfrigérant.

Le procédé d'utilisation est avantageusement simple et rapide de mise en œuvre. Le chauffage est avantageusement uniquement activé lorsque le fluide réfrigérant est figé voire solidifié, ce qui est contrôlé via le paramètre physique. Ceci ne perturbe donc pas les échanges thermiques entre le flux d'air et le fluide réfrigérant. En outre, cela évite de devoir installer un échangeur de chaleur externe, encombrant et peu efficace. Le dispositif de chauffage sécuritaire s'étend avantageusement de manière interne aux canaux de circulation en contact direct avec le fluide réfrigérant, pour une action rapide, globale et efficace.

De préférence, le procédé d'utilisation comporte une étape d'inactivation du dispositif de chauffage sécuritaire, de préférence lorsque le paramètre physique mesuré est supérieur au seuil. Le dispositif de chauffage sécuritaire forme ainsi un dispositif en attente, qui est activé uniquement lorsque le fluide réfrigérant fige ou se solidifie. Cela ne perturbe pas la fonction principale de refroidissement du système de refroidissement.

De préférence, le procédé comporte une étape d'activation lors du démarrage ou redémarrage de l'ensemble propulsif d'aéronef.

De préférence, une étape d'activation et une étape d'inactivation sont mises en œuvre à chaque cycle de fonctionnement de l'ensemble propulsif d'aéronef, afin de vérifier son bon fonctionnement et de limiter le risque de colmatage par un corps étranger.

De préférence, le système de refroidissement comporte une pluralité d'organes de mesure, dont au moins un s'étendant à l'aval du dispositif chauffage sécuritaire, afin de détecter une fuite dans celui-ci, ou un fonctionnement en continu malgré l'étape d'inactivation, qui pourrait être néfaste à la sécurité du vol.

L'invention concerne également un procédé d'utilisation d'un aéronef tel que décrit précédemment mettant en œuvre le procédé d'utilisation tel que décrit précédemment. De préférence, le procédé d'utilisation est mis en œuvre lors d'un arrêt en vol du moteur.

L'invention concerne également un procédé de fabrication du système de fabrication du système de refroidissement tel que décrit précédemment, comportant une étape de fixation du dispositif de chauffage sécuritaire de manière interne sur la peau interne et une étape d'assemblage de la peau interne et de la peau externe pour former les canaux de circulation. De préférence, le dispositif de chauffage sécuritaire est fixé dans les logements formés par les ondulations de la peau interne. La fabrication du système de refroidissement est avantageusement simple, facile et rapide.

### PRESENTATION DES FIGURES

L'invention sera mieux comprise à la lecture de la description qui va suivre, donnée à titre d'exemple, et se référant aux figures suivantes, données à titre d'exemples non limitatifs, dans lesquelles des références identiques sont données à des objets semblables.
La [Fig.1] est une représentation schématique en demi-coupe longitudinale d'un ensemble propulsif d'aéronef comprenant un système de refroidissement selon une forme de réalisation de l'invention.
La [Fig.2] est une représentation schématique en perspective du système de refroidissement selon une forme de réalisation de l'invention.
La [Fig.3] est une représentation schématique en coupe transversale du système de refroidissement de la [Fig.2].
La [Fig.4A] est une représentation schématique en coupe transversale d'un canal de circulation du système de refroidissement avec un dispositif de chauffage sécuritaire sous la forme d'une conduite interne de fluide caloporteur selon une forme de réalisation de l'invention.
La [Fig.4B] est une représentation schématique en coupe transversale d'un canal de circulation du système de refroidissement avec un dispositif de chauffage sécuritaire sous la forme d'un câble résistif interne selon une forme de réalisation de l'invention.
La [Fig.5A] et la [Fig.5B] sont deux représentations schématiques simplifiées du positionnement du dispositif de chauffage sécuritaire dans les canaux de circulation du système de refroidissement selon deux formes de réalisation de l'invention.
La [Fig.6] est une représentation schématique du positionnement du dispositif de chauffage sécuritaire dans les canaux de circulation du système de refroidissement selon une forme de réalisation de l'invention.
La [Fig.7] est une représentation schématique du procédé d'utilisation du système de refroidissement selon un mode de réalisation de l'invention.
La [Fig.8] est une représentation schématique des transferts thermiques dans le système de refroidissement lorsque le dispositif de chauffage sécuritaire est désactivé.
La [Fig.9] est une représentation schématique des transferts thermiques dans le système de refroidissement lorsque le dispositif de chauffage sécuritaire est activé.

Il faut noter que les figures exposent l'invention de manière détaillée pour mettre en œuvre l'invention, lesdites figures pouvant bien entendu servir à mieux définir l'invention le cas échéant.

### DESCRIPTION DETAILLEE DE L'INVENTION

L'invention concerne un système de refroidissement d'un fluide réfrigérant pour aéronef qui comporte un dispositif de chauffage sécuritaire pour éviter que le fluide réfrigérant ne fige voire se solidifie lorsque le débit de fluide réfrigérant est faible ou en cas d'exposition prolongée à de très faibles températures. L'invention présente un intérêt particulier lors d'un arrêt en vol du moteur de l'aéronef, mais également lors d'un stationnement prolongé au sol par temps très froid.

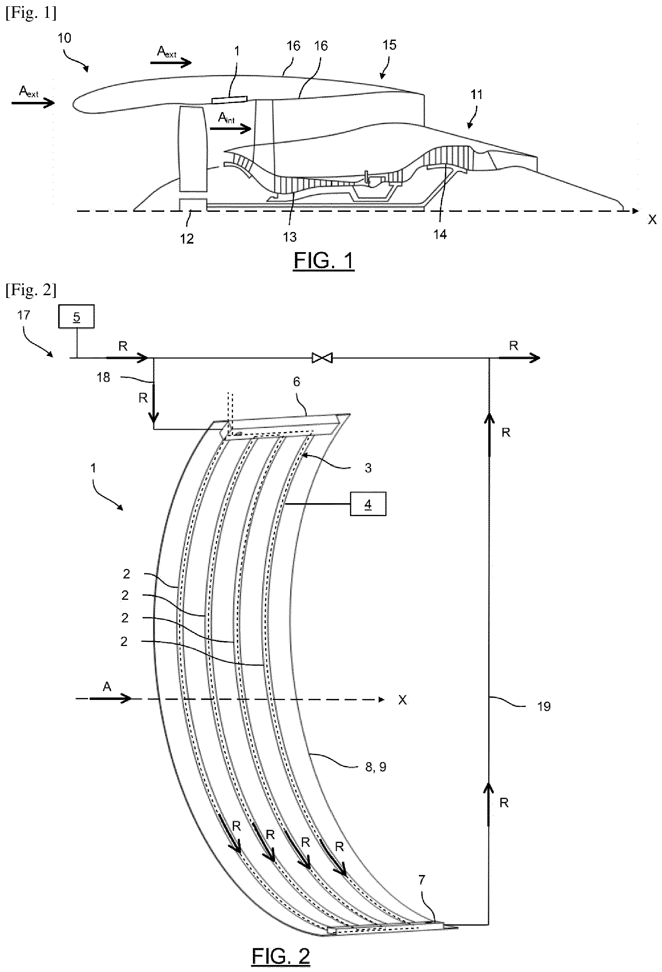

En référence à la [Fig.1] et comme décrit précédemment, un aéronef comprend un ou plusieurs ensembles propulsifs 10 comprenant une turbomachine 11 et une nacelle 15. La turbomachine 11 s'étend selon un axe longitudinal X orienté d'amont en aval et est configurée pour permettre la propulsion de l'aéronef à partir de l'accélération d'un flux d'air intérieur Aᵢₙₜcirculant d'amont en aval dans la turbomachine et provenant d'un flux d'air extérieur Aₑₓₜ. La nacelle 15 s'étend autour de la turbomachine 11 selon l'axe longitudinal X et permet de guider une partie du flux d'air extérieur Aₑₓₜ dans la turbomachine 11.

Comme illustré sur la [Fig.1] et décrit précédemment, la turbomachine 11 comprend un ensemble d'organes rotatifs, tels qu'une soufflante 12, un ou plusieurs compresseurs 13, une ou plusieurs turbines 14, un boîtier d'entraînement d'accessoires (non représenté), un ou plusieurs générateurs électriques d'accessoires (non représentés), etc. En référence aux figures 1 et 2, pour assurer le refroidissement et la lubrification des organes rotatifs, l'ensemble propulsif d'aéronef 10 comporte un circuit fermé 17 de fluide réfrigérant R, usuellement de l'huile, qui circule au contact des portions tournantes des organes rotatifs (non représenté). Ceci permet de transférer la chaleur générée par le frottement des portions tournantes au fluide réfrigérant R, de manière à refroidir les organes rotatifs. Par souci de clarté, les zones de la turbomachine 11 comportant des organes rotatifs à refroidir seront désignées « zones chaudes ».

Comme illustré sur les figures 1 et 2, le circuit fermé 17 comporte un système de refroidissement 1 du fluide réfrigérant R qui comporte une conduite d'entrée 18, dans laquelle circule du fluide réfrigérant R à refroidir, et une conduite de sortie 19, dans laquelle circule du fluide réfrigérant R refroidi. Le système de refroidissement 1 comporte un ensemble de canaux de circulation 2 du fluide réfrigérant R, configurés pour être au contact d'un flux d'air A ([Fig.2]) de manière à refroidir le fluide réfrigérant R qui a accumulé de la chaleur après avoir circulé au contact des zones chaudes. En référence à la [Fig.2], le système de refroidissement 1 comporte également un distributeur 6 et un collecteur 7 configurés respectivement pour distribuer et collecter le fluide réfrigérant R dans les canaux de circulation 2.

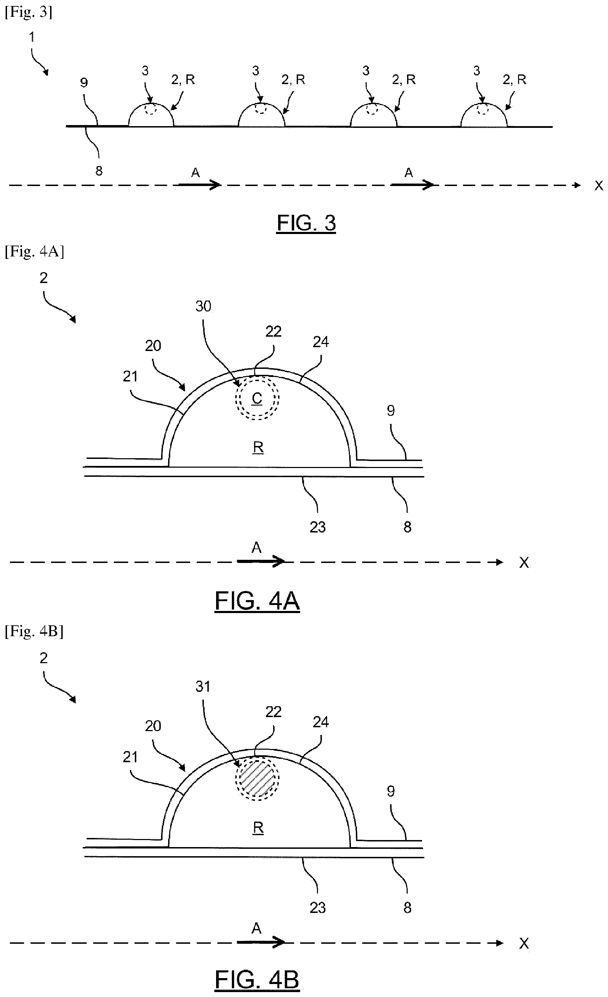

En référence aux figures 2 et 3, le système de refroidissement 1 comporte une peau externe 8 et une peau interne 9 fixées ensemble, par soudage ou collage à titre d'exemples, qui définissent ensemble les canaux de circulation 2. Selon un aspect préféré illustré sur la [Fig.3], la peau externe 8 est lisse de manière à être aérodynamique et favoriser la circulation du flux d'air A. La peau externe 8 est configurée pour être en contact direct avec le flux d'air A.

La peau interne 9 comporte des concavités définissant les canaux de circulation 2. De préférence, les canaux de circulation 2 comportent une section transversale en forme de demi-ellipse, de préférence en forme de demi-cercle qui maximise la surface d'échange avec le flux d'air A comme illustré sur la [Fig.3]. Le système de refroidissement 1 est de préférence exempt d'ailettes formant des aspérités au niveau de la peau externe 8 qui perturbent l'écoulement du flux d'air A. De préférence, la peau externe 8 et la peau interne 9 sont rigides et réalisées à partir d'un alliage d'aluminium, de préférence d'épaisseur comprise entre 0,8 mm et 2 mm.

Selon un aspect préféré illustré sur la [Fig.1], la peau externe 8 forme une portion du carénage 16 de la nacelle 15. Autrement dit, le système de refroidissement 1 se présente sous la forme d'un échangeur de chaleur surfacique monté à la surface de la nacelle 15 de manière à être au contact du flux d'air A. Dans cet exemple, le système de refroidissement 1 est positionné en aval de la soufflante 12 sur la face intérieure du carénage 16 tourné vers la turbomachine 11, de préférence, en amont des aubes de redresseur. Le système de refroidissement 1 est ainsi en contact avec un flux d'air intérieur Aᵢₙₜ important issu de la soufflante 12 et circulant dans la veine secondaire de la turbomachine 11. Il va cependant de soi que le système de refroidissement 1 pourrait être positionné de manière quelconque à la surface de la nacelle 15, sur la face intérieure ou extérieure, au niveau du capot de soufflante, de l'inverseur de poussée (non représenté), de la veine secondaire et de la tuyère à titre d'exemples. Le système de refroidissement 1 pourrait notamment être positionné sur la face extérieure du carénage 16 opposée à la face intérieure, de manière à être au contact du flux d'air extérieur Aₑₓₜ à la turbomachine 11. Par la suite, le flux d'air A désigne indifféremment le flux d'air intérieur Aᵢₙₜ ou le flux d'air extérieur Aₑₓₜ.

Comme illustré sur les figures 2 et 3, les canaux de circulation 2 s'étendent de manière circonférentielle autour de l'axe longitudinal X dans une portion angulaire de la nacelle 15. Les canaux de circulation 2 s'étendent ainsi dans un tronçon axial par rapport à l'axe longitudinal X parallèlement les uns par rapport aux autres. Chaque canal de circulation 2 s'étend ainsi dans un plan transversal à l'axe longitudinal X, positionné en amont ou en aval des plans transversaux des autres canaux de circulation 2. Dans cet exemple, les canaux de circulation 2 sont au nombre de quatre, mais il va de soi que ce nombre pourrait être différent. De préférence, la longueur totale des canaux de circulation 2 est supérieure à 1 m, de préférence supérieure à 2 m, et préférentiellement inférieure à 4 m. De préférence également, les canaux de circulation 2 comportent une section transversale de surface supérieure à 0,3 cm² et inférieure à 2 cm². De préférence également, la distance longitudinale séparant deux canaux de circulation 2 voisins est supérieure à 3 cm et inférieure à 5 cm. Les canaux de circulation 2 sont ainsi espacés et comportent une surface d'échange importante pour favoriser les échanges convectifs avec le flux d'air extérieur A.

Selon l'invention, comme illustré sur les figures 2 et 3, le système de refroidissement 1 comporte en outre un dispositif de chauffage sécuritaire 3 (représenté en pointillés), s'étendant de manière interne dans les canaux de circulation 2 de manière à chauffer le fluide réfrigérant R. Le système de refroidissement 1 comprend également :
- un organe de mesure 4 d'un paramètre physique P_{R} du fluide réfrigérant R, qui est fonction du débit du fluide réfrigérant R dans les canaux de circulation 2, et
- un organe de commande 5 configuré pour activer le dispositif de chauffage sécuritaire 3 lorsque le paramètre physique P_{R} mesuré est inférieur à un seuil prédéterminé correspondant à un débit minimal prédéterminé du fluide réfrigérant R dans les canaux de circulation 2.

De préférence, le paramètre physique P_{R} se présente sous la forme de l'un des paramètres physiques suivants : la température, la vitesse, le débit, la viscosité et la pression. Le paramètre physique P_{R} se présente ainsi sous la forme d'un paramètre physique dont la variation est liée à celle du débit dans les canaux de circulation 2. Ceci permet, via la mesure d'un paramètre P_{R} donné, de déterminer si la circulation du fluide réfrigérant R est fluide dans les canaux de circulation 2 ou s'il est nécessaire d'activer le dispositif de chauffage sécuritaire 3.

Selon un aspect préféré, le paramètre physique P_{R} se présente sous la forme de la température du fluide réfrigérant R. Le seuil prédéterminé se présente de préférence sous la forme d'une température est inférieure à -20°C, de préférence inférieure à - 30°C, et préférentiellement supérieure à -50°C. A une telle température seuil, l'huile, i.e. le fluide réfrigérant R, est figé, voire solidifié, ce qui perturbe sa circulation dans le système de refroidissement 1 et, par voie de conséquence, le refroidissement des zones chaudes. L'activation du dispositif de chauffage sécuritaire 3 permet de chauffer le fluide réfrigérant R afin de réduire sa viscosité et favoriser sa circulation. La température du fluide réfrigérant R à l'entrée des canaux de circulation 2 est usuellement comprise entre 50°C et 100°C lors du régime de croisière de l'aéronef. La température du flux d'air extérieur A est quant à elle comprise entre -40°C et -70°C à une altitude de croisière de 10 000m. La température seuil peut notamment être atteinte en cas d'arrêt en vol du moteur ou en cas de stationnement prolongé au sol par temps très froid, à savoir en présence d'une température inférieure à -40°C durant au moins 15 minutes.

Selon un autre aspect préféré, le paramètre physique P_{R} se présente sous la forme d'une vitesse, d'un débit ou d'une viscosité, locale ou moyenne, mesurée en un ou plusieurs points des canaux de circulation 2. Selon un autre aspect préféré, le paramètre physique P_{R} se présente sous la forme d'une pression mesurée en un ou plusieurs points des canaux de circulation 2, par exemple en entrée et en sortie des canaux de circulation 2 de manière à déterminer une différence de pression. En cas de figeage du fluide réfrigérant, la différence de pression augmente au-dessus d'un seuil prédéterminé.

En référence aux figures 4A et 4B et comme ce sera présenté par la suite, le dispositif de chauffage sécuritaire 3 se présente de préférence sous la forme d'une ou plusieurs conduites de chauffage 30, 31, par exemple des conduites 30 de fluide caloporteur C (voir [Fig.4A]) ou des câbles électriques résistifs 31 (voir [Fig.4B]). L'organe de mesure 4 se présente quant à lui par exemple sous la forme d'un capteur de température, d'un débitmètre, d'un capteur de vitesse ou d'un capteur de pression. De préférence, l'organe de mesure 4 est monté dans les canaux de circulation 2. L'organe de commande 5 se présente de préférence sous la forme d'au moins une vanne dans le cas de conduite(s) 30 de fluide caloporteur C ou d'un commutateur électrique dans le cas de câbles électriques résistifs 31. L'organe de commande 5 est monté sur le dispositif de chauffage sécuritaire 3, de préférence en entrée et/ou en sortie.

En référence à la [Fig.3], le dispositif de chauffage sécuritaire 3, quelle que soit sa forme, s'étend de manière interne aux canaux de circulation 2 en contact direct avec le fluide réfrigérant R pour favoriser les échanges par conduction. Cela permet d'éviter la formation d'une portion solide dans les canaux de circulation 2.

Le dispositif de chauffage sécuritaire 3 est de plus fixé sur la face interne 21 de la paroi 20 des canaux de circulation 2, c'est-à-dire la peau interne 9, pour éviter les chocs et vibrations lors du vol de l'aéronef que subie la peau externe 8. Selon un aspect préféré illustré sur les figures 3, 4A et 4B, le dispositif de chauffage sécuritaire 3 est fixé sur la portion opposée 24 à la portion d'échange 23 avec le flux d'air extérieur A. Autrement dit, le dispositif de chauffage sécuritaire 3 est fixé sur la peau interne 9 à distance du flux d'air extérieur A, de préférence le plus éloigné possible, afin de ne pas perturber les échanges thermiques avec le flux d'air extérieur A. Le dispositif de chauffage sécuritaire 3 n'est pas en contact avec la paroi externe 8 afin de favoriser le chauffage du fluide réfrigérant R et de ne pas dissiper la chaleur dans le flux d'air extérieur A. De préférence, le dispositif de chauffage sécuritaire 3 est fixé aux canaux de circulation par un ensemble de points de fixation 22 (voir figures 4A et 4B) discontinus les uns des autres, afin de tolérer une différence de dilatation thermique entre le dispositif de chauffage sécuritaire 3 et les canaux de circulation 2. La fixation est de préférence obtenue par soudage ou collage.

En référence à la [Fig.2], le dispositif de chauffage sécuritaire 3 s'étend sur au moins un tiers de la longueur des canaux de circulation 2, de préférence sur au moins la moitié, et préférentiellement sur la totalité de la longueur des canaux de circulation 2 dans l'exemple de la [Fig.2]. Dans cet exemple également, le dispositif de chauffage sécuritaire 3 s'étend dans le distributeur 6 et dans le collecteur 7. Ceci permet un chauffage global et efficace, toute obturation étant évitée. En référence à la [Fig.3], le dispositif de chauffage sécuritaire 3, quelle que soit sa forme, comporte une section transversale au moins deux fois inférieure, de préférence au moins trois fois inférieure, et préférentiellement au plus cinq fois inférieure, à la section transversale des canaux de circulation 2. Ceci permet de ne pas perturber la circulation du fluide réfrigérant R tout en maximisant la surface d'échange avec le dispositif de chauffage sécuritaire 3. De préférence, le diamètre du dispositif de chauffage sécuritaire 3 est inférieur à 4mm et supérieur à 1mm.

En référence à la [Fig.4A] illustrant un dispositif de chauffage sécuritaire 3 comportant une ou plusieurs conduite(s) 30 de fluide caloporteur C, le fluide caloporteur C se présente de préférence sous la forme d'air. Le dispositif de chauffage sécuritaire 3 comporte de plus un organe de prélèvement d'air, de préférence au niveau du compresseur 13 (voir [Fig.1]), ainsi qu'un organe de rejet de l'air dans le flux d'air extérieur A, de préférence au niveau de l'extérieur de la nacelle, au niveau par exemple des tubes de drainage du moteur. De préférence, la température du fluide caloporteur C est comprise en entrée entre 100°C et 200°C. Un tel circuit ouvert évite avantageusement de devoir prévoir un échangeur de chaleur et un organe de chauffage. Il va cependant de soi qu'un autre fluide caloporteur C pourrait être utilisé, dans un circuit fermé.

Toujours dans l'exemple de la [Fig.4A], la conduite 30 comporte de préférence un matériau conducteur thermiquement, préférentiellement de l'acier inoxydable ou de l'aluminium, d'épaisseur inférieure à 1 mm pour favoriser les échanges thermiques. De préférence également, l'écoulement du fluide caloporteur C dans la conduite 30 est turbulent, préférentiellement de nombre de Reynolds supérieur à 2500.

En référence à la [Fig.4B] illustrant un dispositif de chauffage sécuritaire 3 comportant un ou plusieurs câbles électriques résistifs 31, chaque câble 31 comporte un matériau conducteur autorégulant, à savoir que sa conductivité électrique diminue avec la température. Ceci permet de réguler automatiquement la puissance du chauffage en fonction de la température du fluide réfrigérant R. De préférence, le câble électrique résistif 31 comporte une résistance supérieure à 1,5 Ohm. Le câble électrique résistif 31 est alimenté par une source électrique quelconque de l'aéronef, de préférence un générateur électrique de l'ensemble propulsif 10.

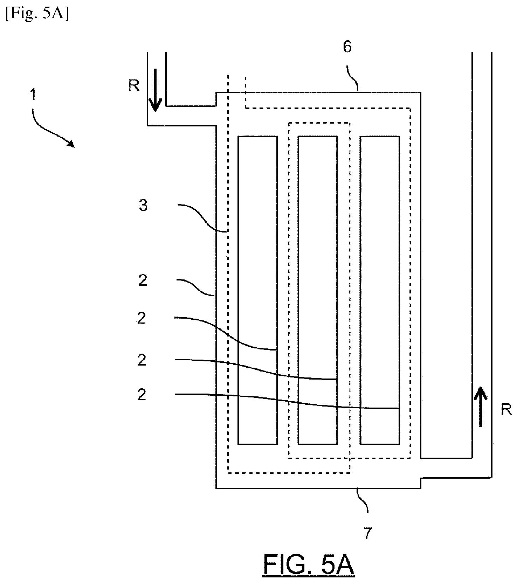

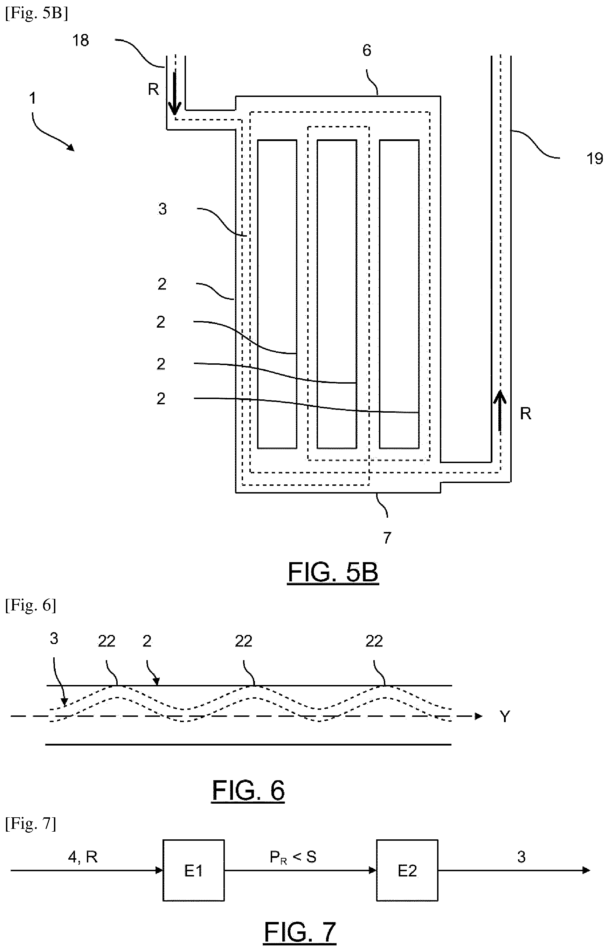

Comme illustré sur les figures 5A et 5B, le dispositif de chauffage sécuritaire 3 se présente de préférence sous la forme d'une unique conduite 30 ou d'un unique câble résistif 31 parcourant les canaux de circulation 2 via le distributeur 6et le collecteur 7. De préférence également, comme illustré sur la [Fig.5B], le dispositif de chauffage sécuritaire 3 s'étend dans la conduite d'entrée 18 et la conduite de sortie 19 du système de refroidissement 1.

Selon un aspect préféré illustré sur la [Fig.6], le dispositif de chauffage sécuritaire 3 s'étend de manière ondulée, de préférence de manière hélicoïdale, dans au moins une portion des canaux de circulation 2. Ceci permet de limiter les efforts appliqués au dispositif de chauffage sécuritaire 3, en cas de différence de dilatation thermique entre le dispositif de chauffage sécuritaire 3 et les canaux de circulation 2.

En référence à la [Fig.7], l'invention concerne également un procédé d'utilisation du système de refroidissement 1 précédemment décrit, qui comporte :
- Une étape de mesure E1 du paramètre physique P_{R} et
- Lorsque le paramètre physique P_{R} est inférieur au seuil S prédéterminé, une étape d'activation E2 du dispositif de chauffage sécuritaire 3, de manière à chauffer le fluide réfrigérant R.

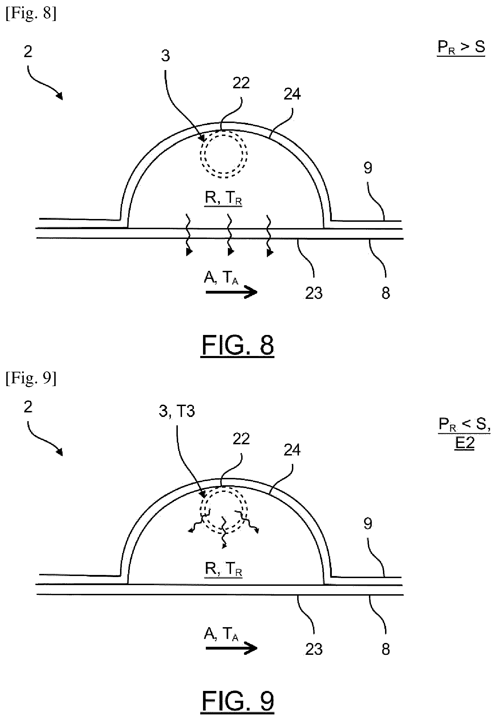

Le dispositif de chauffage sécuritaire 3 se présente ainsi sous la forme d'un dispositif en attente, qui est activé uniquement en cas de besoin, en l'occurrence en-dessous du seuil S du fluide réfrigérant R correspondant à un débit minimal de ce dernier dans les canaux de circulation 2 pour refroidir les zones chaudes. Comme illustré sur la [Fig.8], lorsque le paramètre physique P_{R} est supérieur au seuil S, le dispositif de chauffage sécuritaire 3 est inactif. Autrement dit, la conduite 30 n'est pas alimentée en fluide caloporteur C ou le câble électrique résistif 31 comporte une résistance minimale, de préférence n'est pas sous tension. Les échanges thermiques dans le système de refroidissement 1 se limitent alors à ceux entre le fluide réfrigérant R, formant la source chaude de température T_{R} de l'ordre de 50°C à 150°C, et le flux d'air extérieur A, formant la source froide de température T_{A} de l'ordre de -50°C à -70°C, représentés par des flèches sur la [Fig.8]. Le système de refroidissement 1 assure alors uniquement une fonction de refroidissement du fluide réfrigérant R.

Comme illustré sur la [Fig.9], lorsque le paramètre physique P_{R} est inférieur au seuil S, à savoir par exemple lorsque la température T_{R} du fluide réfrigérant R est inférieure à la température seuil, le dispositif de chauffage sécuritaire 3 est activé. Autrement dit, la conduite 30 est alimentée en fluide caloporteur C par ouverture de la vanne ou le câble électrique résistif 31 est mis sous tension. Le dispositif de chauffage sécuritaire 3 comporte alors une température T3 comprise entre 100 et 200°C, qui permet de chauffer par conduction le fluide réfrigérant R. A noter que les échanges thermiques entre le fluide réfrigérant R et le flux d'air extérieur A persistent, mais qu'ils sont faibles compte tenu de la faible température T_{R} du fluide réfrigérant R.

Une étape d'inactivation est ensuite mise en œuvre pour inactiver le dispositif de chauffage sécuritaire 3, de préférence lorsque le paramètre physique P_{R} est supérieur au seuil S. De préférence, les étapes d'activation E2 et d'inactivation sont contrôlées automatiquement à partir du paramètre physique P_{R}, de préférence la température T_{R} du fluide réfrigérant R. De préférence également, l'étape de mesure E1 de la température T_{R} est mise en œuvre au moins lors d'un arrêt moteur en vol, de préférence de manière périodique. De manière complémentaire, l'étape d'activation est de préférence mise en œuvre pendant une durée fixe à chaque vol afin de vérifier le bon fonctionnement du système.

L'invention concerne également un procédé de fabrication du système de refroidissement 1 qui comporte une étape de fixation du dispositif de chauffage sécuritaire 3 sur la peau interne 9 et une étape d'assemblage de la peau interne 9 et de la peau externe 8. Les étapes de fixation et d'assemblage sont de préférence mises en œuvre par soudage, notamment par soudage par friction/malaxage, et/ou collage. A la fin du procédé de fabrication, le dispositif de chauffage sécuritaire 3 s'étend entre la peau interne 9 et la peau externe 8.

L'invention a été précédemment décrite dans le cadre d'un fluide réfrigérant R sous la forme d'huile qui est configuré pour refroidir et lubrifier les portions tournantes des organes rotatifs d'un ensemble propulsif d'aéronef 10. L'invention s'applique toutefois à un système de refroidissement 1 d'un fluide réfrigérant R quelconque dans l'aéronef, tel que pour le conditionnement de l'air de la cabine de l'aéronef.

## Revendications

1. Système de refroidissement (1) d'un fluide réfrigérant (R) pour aéronef, le système de refroidissement (1) comprenant une pluralité de canaux de circulation (2) du fluide réfrigérant (R), les canaux de circulation (2) étant configurés pour être au moins partiellement en contact avec un flux d'air (A) de manière à refroidir le fluide réfrigérant (R) par convection.
• au moins un dispositif de chauffage sécuritaire (3) s'étendant de manière interne dans au moins une partie desdits canaux de circulation (2) de manière à chauffer directement le fluide réfrigérant (R), le système de refroidissement (1) étant **caractérisé par le fait qu'**il comprend :
• au moins un organe de mesure (4) d'un paramètre physique (P _{R}) du fluide réfrigérant (R), qui est fonction du débit du fluide réfrigérant (R) dans les canaux de circulation (2), et
• au moins un organe de commande (5) configuré pour activer le dispositif de chauffage sécuritaire (3) lorsque le paramètre physique (P_{R}) mesuré est inférieur à un seuil prédéterminé (S) correspondant à un débit minimal du fluide réfrigérant (R) dans les canaux de circulation (2).

2. Système de refroidissement (1) selon la revendication 1, dans lequel le dispositif de chauffage sécuritaire (3) s'étend de manière interne dans au moins un tiers des canaux de circulation (2), de préférence dans au moins la moitié des canaux de circulation (2), préférentiellement dans l'ensemble des canaux de circulation (2).

3. Système de refroidissement (1) selon l'une des revendications 1 et 2, dans lequel au moins une partie des canaux de circulation (2) comportent une paroi (20) comportant une face interne (21) sur laquelle est fixé le dispositif de chauffage sécuritaire (3), de préférence en une pluralité de points de fixation (22) discontinus les uns des autres.

4. Système de refroidissement (1) selon l'une des revendications 1 à 3, dans lequel au moins une partie des canaux de circulation (2) comportent une paroi (20) comportant une portion d'échange (23) en contact avec le flux d'air (A) et une portion opposée (24) à la portion d'échange (23) qui est isolée du flux d'air (A), le dispositif de chauffage sécuritaire (3) étant fixé sur la portion opposée (24).

5. Système de refroidissement (1) selon l'une des revendications 1 à 4, dans lequel au moins une portion du dispositif de chauffage sécuritaire (3) s'étend de manière ondulée à l'intérieur d'au moins un canal de circulation (2), de préférence de manière hélicoïdale.

6. Système de refroidissement (1) selon l'une des revendications 1 à 5, comprenant une peau externe (8), en contact avec le flux d'air (A), et une peau interne (9), isolée du flux d'air (A), définissant ensemble les canaux de circulation (2), la peau externe (8) étant de préférence lisse.

7. Système de refroidissement (1) selon l'une des revendications 1 à 6, dans lequel le dispositif de chauffage sécuritaire (3) comprend au moins une conduite de chauffage (30) dans laquelle circule un fluide caloporteur (C), le fluide caloporteur (C) étant de préférence de l'air.

8. Système de refroidissement (1) selon l'une des revendications 1 à 6, dans lequel le dispositif de chauffage sécuritaire (3) comprend au moins un câble électrique résistif (31).

9. Aéronef comprenant au moins un ensemble propulsif (10) configuré pour assurer sa propulsion et comprenant au moins un système de refroidissement (1) d'un fluide réfrigérant (R) selon l'une des revendications 1 à 8, le fluide réfrigérant (R) étant de préférence configuré pour refroidir au moins un organe rotatif de l'ensemble propulsif (10).

10. Procédé d'utilisation d'un système de refroidissement (1) selon l'une des revendications 1 à 8, comprenant :
• Une étape de mesure (E1) d'un paramètre physique (P_{R}) du fluide réfrigérant (R), qui est fonction du débit du fluide réfrigérant (R) dans les canaux de circulation (2), et
• Lorsque le paramètre physique (P_{R}) mesuré est inférieur à un seuil prédéterminé (S) correspondant à un débit minimal du fluide réfrigérant (R) dans les canaux de circulation (2), une étape d'activation (E2) du dispositif de chauffage sécuritaire (3), de manière à chauffer le fluide réfrigérant (R).

## Patentansprüche

1. Kühlsystem (1) für ein Kühlfluid (R) eines Flugzeugs, wobei das Kühlsystem (1) eine Vielzahl von Strömungskanälen (2) für das Kühlfluid (R) umfasst, wobei die Strömungskanäle (2) so ausgelegt sind, dass sie zumindest teilweise mit einem Luftstrom (A) in Kontakt stehen, um das Kühlfluid (R) durch Konvektion zu kühlen,
• mindestens eine Sicherheitsheizvorrichtung (3), die sich intern in mindestens einem Teil der Strömungskanäle (2) erstreckt, um das Kühlfluid (R) direkt zu erwärmen,
wobei das Kühlsystem (1) **dadurch gekennzeichnet ist, dass** es umfasst:
• mindestens ein Messelement (4) für einen physikalischen Parameter (P_{R}) des Kühlfluids (R), der von der Durchflussmenge des Kühlfluids (R) in den Strömungskanälen (2) abhängt, und
• mindestens ein Steuerelement (5), das so ausgelegt ist, dass es die Sicherheitsheizvorrichtung (3) aktiviert, wenn der gemessene physikalische Parameter (P_{R}) unter einem vorgegebenen Schwellenwert (S) liegt, der einem Mindestdurchfluss des Kühlfluids (R) in den Strömungskanälen (2) entspricht.

2. Kühlsystem (1) nach Anspruch 1, wobei sich die Sicherheitsheizvorrichtung (3) innen in mindestens einem Drittel der Strömungskanäle (2), vorzugsweise in mindestens der Hälfte der Strömungskanäle (2), vorzugsweise in allen Strömungskanälen (2), erstreckt.

3. Kühlsystem (1) nach einem der Ansprüche 1 und 2, wobei mindestens ein Teil der Strömungskanäle (2) eine Wand (20) mit einer Innenseite (21) aufweist, an der die Sicherheitsheizvorrichtung (3) befestigt ist, vorzugsweise an einer Vielzahl voneinander diskontinuierlicher Befestigungspunkte (22).

4. Kühlsystem (1) nach einem der Ansprüche 1 bis 3, wobei mindestens ein Teil der Strömungskanäle (2) eine Wand (20) aufweist, die einen mit dem Luftstrom (A) in Kontakt stehenden Austauschabschnitt (23) und einen dem Austauschabschnitt (23) gegenüberliegenden Abschnitt (24) aufweist, der von dem Luftstrom (A) isoliert ist, wobei die Sicherheitsheizvorrichtung (3) an dem gegenüberliegenden Abschnitt (24) befestigt ist.

5. Kühlsystem (1) nach einem der Ansprüche 1 bis 4, wobei sich mindestens ein Abschnitt der Sicherheitsheizvorrichtung (3) wellenförmig, vorzugsweise spiralförmig, innerhalb mindestens eines Strömungskanals (2) erstreckt.

6. Kühlsystem (1) nach einem der Ansprüche 1 bis 5, mit einer mit dem Luftstrom (A) in Kontakt stehenden Außenhaut (8) und einer vom Luftstrom (A) isolierten Innenhaut (9), die zusammen die Strömungskanäle (2) bilden, wobei die Außenhaut (8) vorzugsweise glatt ist.

7. Kühlsystem (1) nach einem der Ansprüche 1 bis 6, wobei die Sicherheitsheizvorrichtung (3) mindestens eine Heizleitung (30) umfasst, in der ein Wärmeträgerfluid (C) zirkuliert, wobei das Wärmeträgerfluid (C) vorzugsweise Luft ist.

8. Kühlsystem (1) nach einem der Ansprüche 1 bis 6, wobei die Sicherheitsheizvorrichtung (3) mindestens ein elektrisches Widerstandskabel (31) umfasst.

9. Flugzeug mit mindestens einer Antriebseinheit (10), die zu dessen Antrieb ausgelegt ist und mindestens ein Kühlsystem (1) für ein Kühlfluid (R) nach einem der Ansprüche 1 bis 8 umfasst, wobei das Kühlfluid (R) vorzugsweise zum Kühlen mindestens eines rotierenden Elements der Antriebseinheit ausgelegt ist (10).

10. Verfahren zum Betrieb eines Kühlsystems (1) nach einem der Ansprüche 1 bis 8, umfassend:
• einen Messschritt (E1) eines physikalischen Parameters (P_{R}) des Kühlfluids (R), der von der Durchflussmenge des Kühlfluids (R) in den Strömungskanälen (2) abhängt, und
• wenn der gemessene physikalische Parameter (P_{R}) unter einem vorgegebenen Schwellenwert (S) liegt, der einem Mindestdurchfluss des Kühlfluids (R) in den Strömungskanälen (2) entspricht, einen Aktivierungsschritt (E2) der Sicherheitsheizvorrichtung (3), um das Kühlfluid (R) zu erwärmen.

## Claims

1. System for cooling (1) a refrigerant (R) for an aircraft, the cooling system (1) comprising a plurality of circulation ducts (2) of the refrigerant (R), the circulation ducts (2) being configured to be at least partially in contact with an airflow (A) so as to cool the refrigerant (R) by convection,
- at least one safety heating device (3) extending internally into at least one portion of said circulation ducts (2) so as to directly heat the refrigerant (R), the cooling system (1) being **characterized by** the fact that it comprises :
- at least one member for measuring (4) a physical parameter (P_{R}) of the refrigerant (R), which is according to the flow rate of the refrigerant (R) in the circulation ducts (2), and
- at least one control member (5) configured to activate the safety heating device (3) when the measured physical parameter (P_{R}) is less than a predetermined threshold (S) corresponding to a minimum flow rate of the refrigerant (R) in the circulation ducts (2).

2. Cooling system (1) according to claim 1, wherein the safety heating device (3) extends internally into at least one third of the circulation ducts (2), preferably into at least half of the circulation ducts (2), more preferably into all the circulation ducts (2).

3. Cooling system (1) according to any one of claims 1 and 2, wherein at least one portion of the circulation ducts (2) comprises a wall (20) comprising an inner face (21) on which the safety heating device (3) is attached, preferably in a plurality of attachment points (22) discontinuous from each other.

4. Cooling system (1) according to any one of claims 1 to 3, wherein at least one portion of the circulation ducts (2) comprises a wall (20) comprising an exchange portion (23) in contact with the airflow (A) and an opposite portion (24) to the exchange portion (23) which is isolated from the airflow (A), the safety heating device (3) being attached to the opposite portion (24).

5. Cooling system (1) according to one of claims 1 to 4, wherein at least one portion of the safety heating device (3) extends in a wavy manner within at least one circulation channel (2), preferably in a helical manner.

6. Cooling system (1) according to one of claims 1 to 5, comprising an outer skin (8), in contact with the airflow (A), and an inner skin (9), isolated from the airflow (A), defining together the circulation ducts (2), the outer skin (8) being preferably smooth.

7. Cooling system (1) according to one of claims 1 to 6, wherein the safety heating device (3) comprises at least one heating line (30) wherein a heat transfer fluid (C) circulates, the heat transfer fluid (C) being preferably air.

8. Cooling system (1) according to one of claims 1 to 6, wherein the safety heating device (3) comprises at least one resistive electrical cable (31).

9. Aircraft comprising at least one propulsion assembly (10) configured to provide the propulsion thereof and comprising at least one system for cooling (1) a refrigerant (R) according to one of claims 1 to 8, the refrigerant (R) preferably being configured to cool at least one rotating member of the propulsion assembly (10).

10. Method for using a cooling system (1) according to one of claims 1 to 8, comprising:
- A step of measuring (E1) a physical parameter (P_{R}) of the refrigerant (R), which is according to the flow rate of the refrigerant (R) in the circulation ducts (2), and
- When the measured physical parameter (P_{R}) is less than a predetermined threshold (S) corresponding to a minimum flow of the refrigerant (R) in the circulation ducts (2), a step of activating (E2) the safety heating device (3), so as to heat the refrigerant (R).
